(19) Europäisches Patentamt
European Patent Office
Office européen des brevets

(11) Publication number: **0 241 981 B1**

# EUROPEAN PATENT SPECIFICATION

(45) Date of publication of patent specification: **08.05.91**  (51) Int. Cl.⁵: **A01F 12/28**, A01F 7/06

(21) Application number: **87200624.2**

(22) Date of filing: **03.04.87**

(54) **Method and apparatus for mounting concaves.**

(30) Priority: **07.04.86 US 848507**

(43) Date of publication of application:
**21.10.87 Bulletin 87/43**

(45) Publication of the grant of the patent:
**08.05.91 Bulletin 91/19**

(84) Designated Contracting States:
**DE FR GB**

(56) References cited:
**US-A- 3 957 058**
**US-A- 4 249 543**
**US-A- 4 375 221**

(73) Proprietor: **FORD NEW HOLLAND, INC. (a Delaware corp.)**
**500 Diller Avenue**
**New Holland Pennsylvania 17557(US)**

(72) Inventor: **Bernhardt, Richard P.**
**22 Center Square Road**
**Leola, PA 17540(US)**
Inventor: **Bowman, Robert L.**
**29 West Sunset Avenue**
**Ephrata, PA 17522(US)**
Inventor: **Hyman, Myles**
**1405 Carlton Drive**
**Lancaster, Pennsylvania 17601(US)**
Inventor: **Weber, Steven J.**
**Route 2**
**Denver, PA 17517(US)**
Inventor: **Rowland-Hill, E. William**
**2401 Kingslake Boulevard**
**Naples, Florida 33962(US)**

(74) Representative: **Vandenbroucke, Alberic T.J.**
**FORD NEW HOLLAND N.V. Leon Claeysstraat 3A**
**B-8210 Zedelgem(BE)**

## Description

The present invention relates generally to axial flow combines and, particularly, to an improved method and apparatus for mounting a concave on a mounting frame for selective positioning relative to the threshing and separating rotor.

Axial flow combines of the type shown and described in U.S. Patent No. 4,249,543, currently require a considerable amount of time and effort to remove and install the concaves on its mounting frame proximate to the threshing and separating rotors. In such combine harvesters, the feeder and feed plate must be removed from the combine before the concave front supports can be unbolted and then the concaves removed through the front of the combine. The installation of the concaves involves a reversal of this procedure.

It is the object of the present invention to provide an axial flow combine harvester having at least one concave which is removably mounted relative to a threshing and separating rotor and of which the removal, respectively the installation has been made substantially more easy to accomplish.

According to the invention, an axial flow combine harvester is provided which comprises :
- a pair of transversely spaced apart side sheets, at least one of which includes an access opening;
- at least one threshing and separating rotor extending in a generally longitudinal direction between the side sheets;
- a concave peripherally positioned relative to the at least one rotor; and
- a mounting frame supporting the concave relative to the corresponding rotor; the concave being detachably mounted to the mounting frame by mounting means positioned generally at the transversely opposite longitudinal sides of said concave and the mounting means provided generally at the longitudinal side of the concave facing away from the access opening in the at least one side sheet being formed by cooperating members provided on both the concave and the mounting frame, and which is
characterized in that :
the cooperating mounting members generally at the longitudinal side of the concave facing away from said access opening permit engagement thereof generally in a transverse direction whereby the concave can be mounted on the mounting frame in a transverse direction through said access opening.

Preferably, the concave comprises a pair of transversely extending, longitudinally spaced apart concave frame members. A pair of cooperating mounting members is associated with each on of said concave frame members. Each pair of cooperating mounting members preferably is in the form of a cooperating mounting pin and yoke; the pin being affixed to either one of both the mounting frame and the concave and the yoke being provided on the other one of both said mounting frame and concave and further being positioned such that engagement thereof with the corresponding mounting pin can be effected by moving the concave in the transverse direction.

. In a preferred embodiment, the mounting pins are affixed to the mounting frame and the yokes are connected to the concave frame members. Retaining links preferably also are mounted on the mounting pins in conjunction with the concave yokes and are connected to the concave frame members to retain the concave on the mounting pins during operation of the combine. Support plates carried by the mounting frame can be utilized to support the weight of the concave during the mounting procedure.

According to another aspect of the invention, a method of installing a concave on an axial flow combine harvester is provided; said concave being mountable on a mounting frame provided within the combine harvester and carrying first mounting means which are cooperable with further mounting means on the concave for supporting the concave in cooperative association with a threshing and separating rotor; said method being characterized in that it comprises the steps of :
- inserting the concave through an opening in a side sheet of the combine harvester; said opening being closeable by a door;
- moving the concave in a transverse direction toward the first mounting means to effect engagement between the first and further mounting means, said further mounting means being rotatably movable relative to the first mounting means when engaged to permit movement of the concave relative to the rotor;
- fixing at least one retaining link between the mounting frame and the concave to prevent disengagement of the further mounting means with the first mounting means during operation of the combine harvester; and
- connecting at least one connecting link between the mounting frame and the concave at a distant location from the cooperating first and further mounting means to support the concave (20) on the mounting frame and control the angular position of the concave relative to the rotor.

Thus, in summary, a side mount concave mounting apparatus for use in an axial flow combine utilizing a longitudinally extending threshing and separating rotor is provided and which greatly reduces the time and work required to remove and/or install the concave to the extent that the feeder and feed plate do not need to be removed from the combine in order to remove and/or install said concave. This concave mounting apparatus is durable in construction, inexpensive of manufacture, carefree of maintenance, facile in assemblage and simple and effective in use.

The advantages of this invention will be come apparent upon consideration of the following detailed disclosure of the invention, especially when taken in conjunction with the accompanying drawings, wherein:

Fig. 1 is a left side elevational view of a combine harvester incorporating the principles of the instant invention, a portion of the side sheet of the combine being broken away to more clearly show the relative positions of the threshing and separating rotors and cooperatively mounted concaves;

Fig. 2 is an enlarged partial cross-sectional view taken along lines 2-2 of Fig. 1, looking along the longitudinally extending axis of the threshing and separating rotor, the portions of the infeed structure in front of the left hand threshing rotor portion being broken away to more clearly show the structure and relationships utilized in the side mount concaves forming the instant invention; and

Fig. 3 is an enlarged exploded view of the forwardmost portion of the left hand concave identifying the manner in which the concave and retaining link are mounted on the adjustable mounting frame.

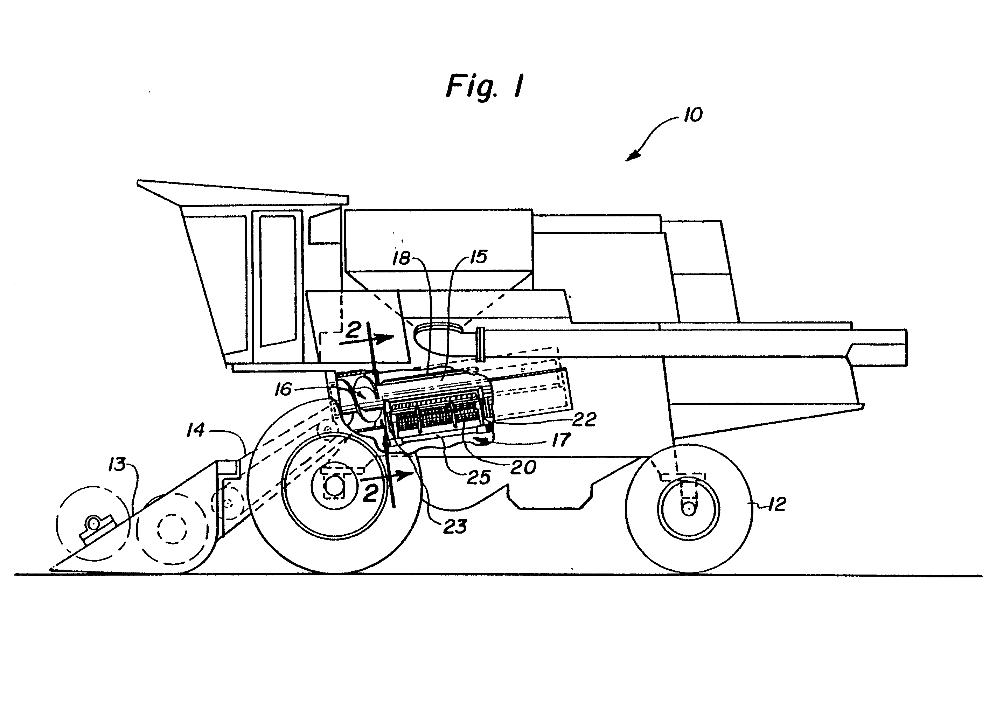

Referring now to the drawings and, particularly, to Fig. 1, a left side elevational view of a crop harvesting machine, commonly referred to as an axial flow combine harvester, incorporating the principles of the instant invention, can be seen. Any left and right references are used as a matter of convenience and are determined by standing at the rear of the machine and facing in the direction of operative travel. The combine 10 is mounted on a wheeled frame 12 to mobilely support the combine 10 over the ground G for the harvesting of crops therefrom. A header 13 is mounted on the forward periphery of the combine 10 to engage and gather crop material from the ground G and consolidate it into a feederhouse structure 14. The feederhouse 14 conveys a flow of crop material into the infeed area 16 of the threshing and separating rotors 15. The flow of crop material then passes into the threshing area 17 between the rotor 15 and the circumferentially mounted concave 20 where grain is threshed and separated from the crop material by rasp bar assemblies 18 cooperating with the concaves 20. While that the combine shown and described herein is a twin rotor axial flow combine, it will be clear to a person skilled in the art that the instant invention is equally applicable to a single rotor axial flow combine as well.

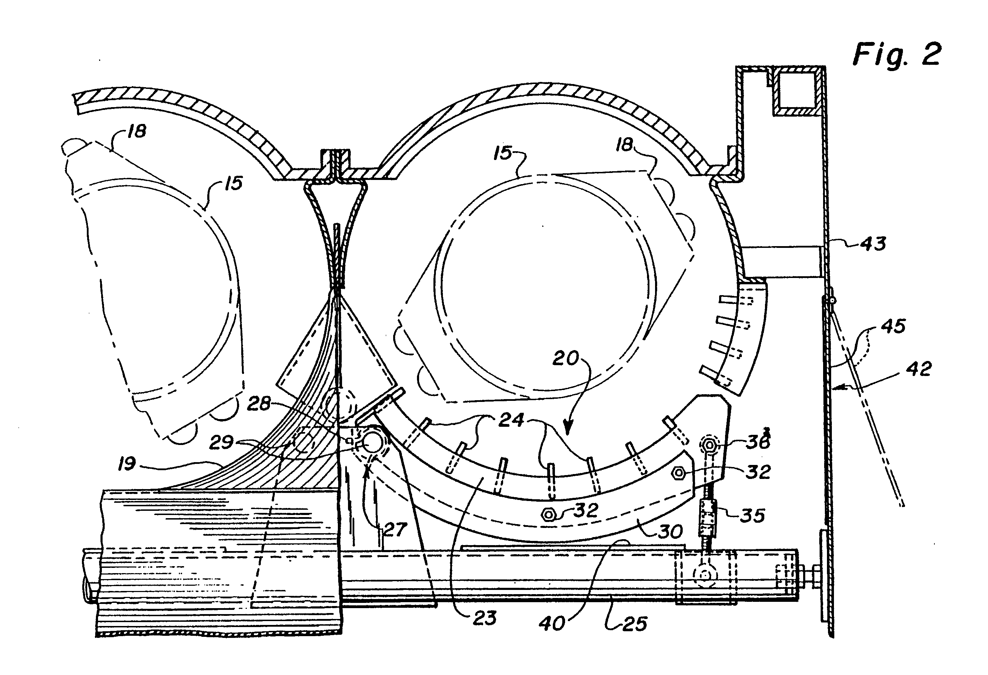

Referring now to Fig. 2, the relationship of a rotor 15 and the rasp bar assemblies 18 mounted thereon with respect to the corresponding concave 20 can best be seen. The concave 20 is provided with at least two longitudinally spaced frame members 22,23, the forwardmost one of which is designated by the reference numeral 23 and which carry a plurality of longitudinally extending rub bars 24 radially positioned relative to the rotor 15. Crop material entering between the rotor 15 and the concave 20 is rubbed between the rasp bar assemblies 18 and the rub bars 24 to separate grain from the crop material. The concave 20 is mounted on an adjustable mounting frame 25 to permit adjustment of the concave 20 relative to the rotor 15 as is described in greater detail in U.S. Patent No. 4, 375,221, the description of which is incorporated herein by reference.

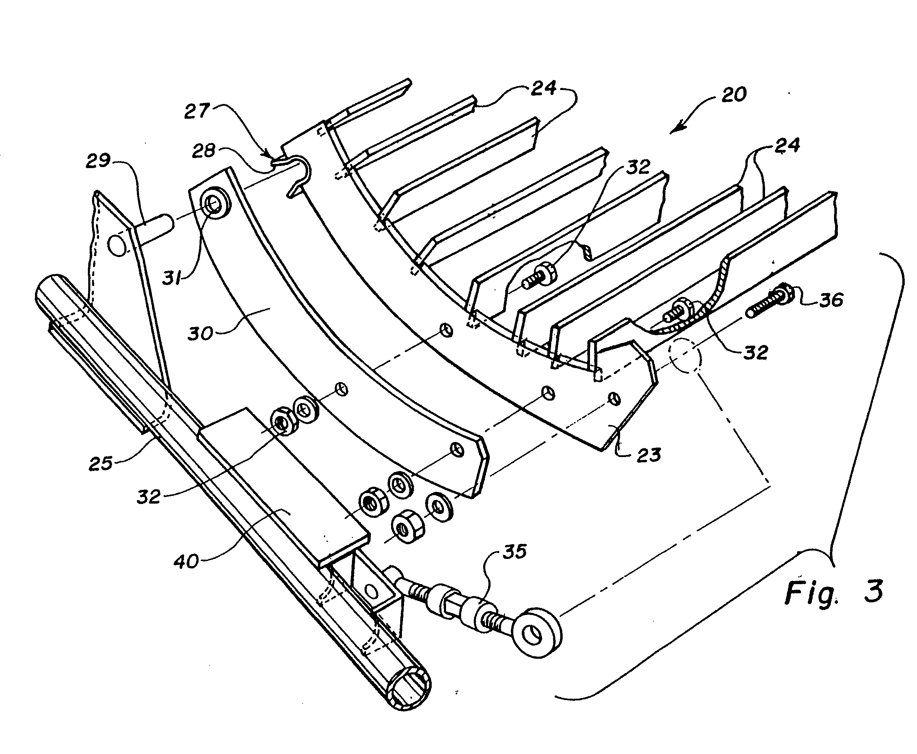

Referring now to Figs. 2 and 3, the structure of the instant invention can best be seen and will be described hereinafter with reference to the left hand concave; the structure and operation of the right hand concave being identical thereto. Although the forwardmost concave frame member 23 is shown in Fig. 3, the rearwardmost concave frame member 22 is constructed in a similar manner and the description given below with respect to the forwardmost frame member 23 is equally applicable to the structure and operation of this rearwardmost concave frame member 22. Also, the description given below with respect to the left hand concave equally applies to the right hand concave. The frame members 22,23 of each concave 20 are provided with a clevis mechanism 27 in the form of open yokes 28 affixed to the frame member 22,23 in a permanent fashion. Each yoke 28 is engageable with a mounting pin 29 projecting in a longitudinal direction from the mounting frame 25 and is oriented in such a manner as to be engageable with said mounting pin 29 when the concave 20 is moved in a transverse direction toward the mounting pins 29.

A retaining link 30 is also mountable on each mounting pin 29 and connectable to the corresponding concave frame member 22,23 by fasteners 32 in a manner such that these retaining links 30 are selectively disconnectable from the corresponding frame members 22 , 23. The use of the retaining links 30, when connected to the corresponding frame member 22,23, fixes the yokes 28 on the respective mounting pin 29 and prevents the concave 20 from bouncing off the mounting pins 29 during operation of the combine 10. It will be noted that preferably two transversely spaced apart fasteners are utilized for coupling each retaining link 30 to the corresponding frame member 22, 23 to guarantee a secure engagement between the corresponding pins 29 and yokes 28. These spaced apart fasteners preferably are positioned proximate to the outboard ends of the retaining links 30 and concave frame members 22, 23 to facilitate access thereto through the respective access openings 42 in the combine side sheets 43.

An adjustable connecting link 35 interconnecting the mounting frame 25 and an outboard portion of each one of the frame members 22, 23 by fasteners 36 controls the rotative position of the concave 20 about the mounting pins 29. It can be seen that an adjustment of the length of the connecting links 35 will affect a rotation of the yokes 28 about the mounting pins 29 on which they are mounted, thereby changing the relative position of the concave 20 with respect to the corresponding rotor 15 in a manner separate from the adjustment of the mounting frame 25.

The mounting frame 25 is provided with plate members 40 positioned beneath the location of the respective concave frame members 22,23 to carry the weight of the concave 20 during the installation of the concave 20 as will be described in greater detail below. As best seen in Fig. 2, the plate members 40 do not support the weight of the concave 20 after the concave 20 has been mounted on the mounting frame 25; the respective concave frame members 22,23 being spaced above the corresponding plate members 40 to permit a rotative movement thereof about the mounting of the yokes 28 on the mounting pins 29 through an adjustment of the connecting links 35.

Using the component parts of the concave and mounting structures as described above, the method of installing the side mount concaves 20 is described below with particular reference being made to Figs. 2 and 3. To install the concave 20 on the mounting frame 25, access to the interior of the combine 10 can be gained through the access opening 42 in the side sheet 43 of the combine 10 and opposite the mounting location of the concave 20 and which is normally covered by a hinged door 45. The retaining links 30 are first mounted on the mounting pins 29 by positioning the retaining links 30 such that the mounting pins 29 are inserted through the corresponding bores 31. The concave 20 is then inserted through the access opening 42 and, using the plates 40 to temporarily support the weight of the concave 20, the frame members 22,23 are positioned so that the yokes 28 can be guided onto the mounting pins 29.

The fasteners 32 are then inserted through the respective frame members 22,23 and the corresponding retaining links 30 to fix the retaining links 30 to the concave frame members 22,23. The adjustable connecting links 35 are then connected to the respective concave frame members 22, 23 by the fasteners 36. Any fine adjustments required of the concave 20 to position it relative to the corresponding threshing and separating rotor 15 can be obtained by adjusting the relative lengths of the connecting links 35. As seen in Fig. 2, once the concave 20 is supported on the mounting pins 29 and the connecting links 35, the respective frame members 22, 23 are lifted off the plate members 40.

One skilled in the art will readily realizes that the purpose of the retaining links 30 is to resist forces imposed on the concaves 20 to prevent the yokes 28 from becoming disengaged from the mounting pins 29 during normal harvesting operation of the combine 10. The retaining links 30 can be unbolted from the concave frame members 22,23 to permit an easy removal of the concaves 20 through the transversely positioned openings 42 in the side sheets 43 of the combine 10. This structure eliminates the need to remove the infeed mechanism 19 located forwardly of the threshing concaves 20 in order to remove, respecively install said concaves 20. Removal of the concaves 20, such as needed for changing the concaves 20, can be accomplished in the reverse manner indicated above for installation of the concaves 20. The connecting links 35 can be disconnected from the concave frame members 22,23 and the concaves 20 rested upon the plate members 40. A disconnection of the retaining links 30 from the frame members 22,23 will permit the yokes 28 to be disengaged from the mounting pins 29 and the concaves 20 to be removed through the openings 42 in the side sheets 43.

It will be understood that changes in the details, materials, steps and arrangement of parts which have been described and illustrated to explain the nature of the invention will occur to and may be made by those skilled in the art upon a reading of this disclosure within the principles and scope of the invention. The foregoing description illustrates the preferred embodiment of the invention; however, concepts, as based upon the description may be employed in other embodiments without departing from the scope of the invention.

As an example, it will be clear to a person skilled in the art that, in an alternative arrangement, the pins 29 may be provided on the concave frame members 22, 23 rather than on the mounting frame 25. In this case, the yokes 28 obviously should be affixed to the mounting frame 25. The retaining links 30 still can be pivotally mounted on the mounting frame 25, preferably generally co-axially with the pins 29 when the concave 20 is mounted on this mounting frame 25. As in the arrangement illustrated in the drawings, the retaining links can be detachably connectable to the respective concave frame members 22, 23 by fasteners 32. Alternatively, the retaining links 30 also may be pivotally mounted on the mounting pins 29 on the concave frame members 22, 23 and be detachably connectable by fastener means 32 to the mounting frame 25. Also, the invention has been described hereabove in connection with a twin rotor axial flow combine. However, it will be clear that this invention equally well is applicable on a single rotor axial flow combine.

## Claims

1. An axial flow combine harvester (10) comprising:
   - a pair of transversely spaced apart side sheets (43), at least one of which includes an access opening (42);
   - at least one threshing and separating rotor (15) extending in a generally longitudinal direction between the side sheets (43);
   - a concave (20) peripherally positioned relative to the at least one rotor (15); and
   - a mounting frame (25) supporting the concave (20) relative to the corresponding rotor (15); the concave (20) being detachably mounted to the mounting frame (25) by mounting means (28, 29, 35) positioned generally at the transversely opposite longitudinal sides of said concave (20) and the mounting means (28, 29) provided generally at the longitudinal side of the concave (20) facing away from the access opening (42) in the at least one side sheet (43) being formed by cooperating members provided on both the concave (20) and the mounting frame (25), and
     characterized in that :
     the cooperating mounting members (28, 29) generally at the longitudinal side of the concave (20) facing away from said access opening (42) permit engagement thereof generally in a transverse direction whereby the concave (20) can be mounted on the mounting frame (25) in a transverse direction through said access opening (42).

2. A combine harvester according to claim 1 characterized in that the concave (20) comprises a pair of transversely extending, longitudinally spaced apart concave frame members (22, 23); a pair of cooperating mounting members (28, 29) being associated with each one of said concave frame members (22, 23).

3. A combine harvester according to claim 2 characterized in that each pair of cooperating mounting members (28, 29) is in the form of a cooperating pin (29) and yoke (28); the pin (29) being affixed to either one of both the mounting frame (25) and the concave (20) and the yoke (28) being provided on the other one of both said mounting frame (25) and concave (20) and further being positioned such that engagement thereof with the corresponding mounting pin (29) can be effected by moving the concave (20) in the transverse direction.

4. A combine harvester according to claim 3 characterized in that at least one retaining linkage means (30) is detachably connectable between the mounting frame (25) and the concave (20) to positionally retain the yokes (28) on the respective mounting pins (29) during operation of the combine harvesters (10).

5. A combine harvester according to claim 4 characterized in that a retaining linkage means (30) is associated with each cooperating pin (29) and yoke (28).

6. A combine harvester according to claim 5 characterized in that each retaining linkage means (30) is in the form of a link which is pivotally mountable on either one of both the mounting frame (25) and a corresponding concave frame member (22, 23) at a location generally in alignment with the corresponding mounting pin (29) and which is detachably connectable to the other one of both said corresponding concave frame member (22, 23) and the mounting frame (25) at a distant location from the corresponding cooperating pin (29) and yoke (28).

7. A combine harvester according to claim 6 characterized in that each retaining link (30) is detachably connectable to said corresponding concave frame member (22, 23) respectively the mounting frame (25) by at least a pair of fasteners (32) at spaced apart locations along the length of said link (30) and at a distance from the corresponding cooperating pin (29) and yoke (28).

8. A combine harvester according to any of the preceding claims, characterized in that the mounting means (35) between the mounting frame (25) and the concave (20) positioned generally at the longitudinal side of the concave (20) adjacent the one side sheet (43) including the access opening (42), are in the form of connecting links (35) detachably interconnecting said concave (20) and said mounting frame (25) to fix the position of the concave (20) relative to the mounting frame (25).

9. A combine harvester according to claim 8, characterized in that the connecting links (35) are adjustable to change the length thereof and cause a rotative motion of the concave (20) about an axis of the cooperating mounting members (28, 29) to positionally adjust the concave (20) relative to the rotor (15).

10. A combine harvester according to any of the preceding claims characterized in that the mounting frame (25) includes support surface means (40) adjacent the concave (20) to temporarily support said concave (20) during the transverse movement thereof to effect engagement between the cooperating mounting members (28, 29) generally at the longitudinal side of the concave (20) facing away from said access opening (42).

11. A combine harvester according to claim 10 when appended directly or indirectly to claim 2, characterized in that the support surface means (40) is in the form of a pair of plate members (40) affixed to the mounting frame (25) beneath the concave frame members (22, 23).

12. A combined harvester according to any of the preceding claims characterized in that the combine harvester is of the twin rotor axial flow type and comprises a single mounting frame (25) adapted to support a pair of side-by-side extending concaves (20) relative to respective threshing and separating rotors (15); each concave (20) being mountable on the mounting frame (25) in a transverse direction through an access opening (42) in the adjacent combine side sheet (43) and cooperable mounting members (28, 29) being associated with both concaves (20) generally at the facing longitudinal sides thereof; said cooperable mounting members (28, 29) permitting engagement therebetween when the concaves (20) are moved in said transverse directions.

13. A method of installing a concave (20) on an axial flow combine harvester (10); said concave (20) being mountable on a mounting frame (25) provided within the combine harvester (10) and carrying first mounting means (29) which are cooperable with further mounting means (28) on the concave (20) for supporting the concave (20) in cooperative association with a threshing and separating rotor (15); the method being characterized in that it comprises the steps of :
- inserting the concave (20) through an opening (42) in a side sheet (43) of the combine harvester (10); said opening (42) being closeable by a door (45);
- moving the concave (20) in a transverse direction toward the first mounting means (29) to effect engagement between the first and further mounting means (29, 28); said further mounting means (28) being rotatably movable relative to the first mounting means (29) when engaged to permit movement of the concave (20) relative to the rotor (15);
- fixing at least one retaining link (30) between the mounting frame (25) and the concave (20) to prevent disengagement of the further mounting means (28) with the first mounting means (29) during operation of the combine harvester (10); and
- connecting at least one connecting link (35) between the mounting frame (25) and the concave (20) at a distant location from the cooperating first and further mounting means (29, 28) to support the concave (20) on the mounting frame (25) and control the angular position of the concave (20) relative to the rotor (15).

14. A method according to claim 13 characterized in that :
- the moving step includes the engaging of a pair of longitudinally spaced apart further mounting members (28) provided on respective frame members (22, 23) of the concave (20) with corresponding ones of a pair of equally longitudinally spaced apart first mounting members (29) provided on said mounting frame (25); said first and further pairs of mounting members (29, 28) respectively forming said first and further mounting means (29, 28);
- the fixing step includes the fixing of a retaining link (30) between each one of said concave frame members (22,23) and the mounting frame (25); and
- the connecting step includes the connecting of a connecting link (35) between each said concave frame member (22, 23) and the mounting frame (25) at a distant location from each pair of cooperating first and further mounting members (29, 28) associated with each respective concave frame member (22, 23).

**15.** A method according to claim 13 or 14 characterized in that the moving step includes the step of resting the concave (20) on support surface means (40) positioned on the mounting frame (25) to support a portion of the weight of the concave (20) during said moving step.

**16.** A method according to claim 15 characterized in that the connecting step includes :
- the step of lifting the concave (20) above the support surface means (40); and
- the step of selecting the length of the or each connecting link (35) to select a desired rotated position of the concave (20) about the first mounting means (29) on the mounting frame (25) and, thereby, selectively position the concave (20) relative to the rotor (15).

**17.** A method according to any of the claims 14 to 16 characterized in that the fixing step includes the steps of :
- mounting a retaining link (30) on each respective first mounting member which is in the form of a longitudinally extending mounting pin (29) affixed to the mounting frame (25); said retaining links (30) being positionable on said mounting pins (29) only along the axis thereof; and
- fastening said retaining links (30) to the corresponding said concave frame members (22, 23).

**Revendications**

**1.** Moissonneuse-batteuse à écoulement axial (10) comportant :
- deux tôles latérales (43) espacées transversalement, dont l'une au moins comprend un orifice d'accès (42);
- au moins un rotor de battage et de séparation (15) s'étendant dans une direction sensiblement longitudinale entre les tôles latérales (43) ;
- un contre-batteur (20) positionné à la périphérie par rapport audit rotor (15) ; et
- un châssis de montage (25) supportant le contre-batteur (20) par rapport au rotor (15) correspondant ; le contre-batteur (20) étant monté de façon amovible sur le châssis de montage (25) à l'aide de moyens de montage (28, 29, 35) positionnés sensiblement au niveau des côtés longitudinaux opposés transversalement dudit contre-batteur (20) et les moyens de montage (28, 29), prévus sensiblement au niveau du côté longitudinal du contre-batteur (20) orienté à l'opposé de l'orifice d'accès (42) ménagé dans ladite tôle latérale (43), étant formés par des organes coopérants prévus à la fois sur le contre-batteur (20) et sur le châssis de montage (25), et qui est caractérisée en ce que :
les éléments de montage coopérants (28, 29) prévus sensiblement au niveau du côté longitudinal du contre-batteur (20) orienté à l'opposé dudit orifice d'accès (42) permettent un accouplement avec le contrebatteur sensiblement suivant une direction transversale, moyennant quoi le contre-batteur (20) peut être monté sur le châssis de montage (25) dans une direction transversale par ledit orifice d'accès (42).

**2.** Moissonneuse-batteuse selon la revendication 1, caractérisée en ce que le contre-batteur (20) comporte deux éléments de châssis de contre-batteur (22, 23) s'étendant transversalement et espacés longitudinalement; deux éléments de montage coopérants (28, 29) étant associés à chacun desdits éléments de châssis de contre-batteur (22, 23).

**3.** Moissonneuse-batteuse selon la revendication 2, caractérisée en ce que les deux éléments de montage coopérants (28, 29) ont de préférence la forme d'une broche (29) et d'un étrier (28) coopérants ; la broche (29) étant fixée au châssis de montage (25) ou au contre-batteur (20) et l'étrier (28) étant prévu respectivement sur le contre-batteur (20) ou sur le châssis de montage (25) et étant en outre positionné de telle sorte qu'on puisse l'accoupler avec la broche de montage correspondante (29) en déplaçant le contre-batteur (20) dans le sens transversal.

**4.** Moissonneuse-batteuse selon la revendication 3, caractérisée en ce qu'au moins un moyen formant tringlerie de retenue (30) est apte à être intercalé de façon amovible entre le châssis de montage (25) et le contre-batteur (20) pour maintenir en position les étriers (28) sur les broches de montage respectives (29) pendant le fonctionnement des moissonneuses-batteuses (10).

**5.** Moissonneuse-batteuse selon la revendication 4, caractérisée en ce qu'un moyen formant tringlerie de retenue (30) est associé à chaque broche (29) et étrier (28) coopérants.

**6.** Moissonneuse-batteuse selon la revendication 5, caractérisée en ce que chaque moyen formant tringlerie de retenue (30) a la forme d'une tringle qui est apte à être montée pivotante sur le châssis de montage (25) ou sur un élément de châssis de contre-batteur (22, 23) correspondant en un point sensiblement dans l'alignement de la broche de montage (29) correspondante, et qui est apte à être reliée de façon amovible respectivement à l'élément de châssis de contre-batteur (22, 23) correspondant ou au châssis de montage (25) en un point éloigné de la Croche (29) et de l'étrier (28) coopérants correspondants.

7. Moissonneuse-batteuse selon la revendication 6, caractérisée en ce que chaque tringle de retenue (30) est apte à être reliée de façon amovible audit élément de châssis de contre-batteur correspondant (22, 23), respectivement au châssis de montage (25) à l'aide d'au moins deux attaches (32) en des points espacés sur la longueur de ladite tringle (30) et à une certaine distance de la broche (29) et de l'étrier (28) coopérants correspondants.

8. Moissonneuse-batteuse selon l'une quelconque des revendications précédentes, caractérisée en ce que les moyens de montage (35) prévus entre le châssis de montage (25) et le contre-batteur (20) et positionnés sensiblement au niveau du côté longitudinal du contrebatteur (20) voisin de l'une des tôles latérales (43) comprenant l'orifice d'accès (42) ont la forme de tringles de liaison (35) reliant entre eux de façon amovible ledit contre-batteur (20) et ledit châssis de montage (25) pour fixer la position du contre-batteur (20) par rapport au châssis de montage (25).

9. Moissonneuse-batteuse selon la revendication 8, caractérisée en ce que les tringles de liaison (35) sont réglables pour varier en longueur et provoquer un mouvement rotatif du contre-batteur (20) autour d'un axe des éléments de montage coopérants (28, 29) en vue de régler la position du contre-batteur (20) par rapport au rotor (15).

10. Moissonneuse-batteuse selon l'une quelconque des revendications précédentes, caractérisée en ce que le châssis de montage (25) comprend des moyens forment surfaces de support (40) voisins du contre-batteur (20) pour supporter temporairement celui-ci pendant son mouvement transversal destiné à réaliser l'accouplement entre les éléments de montage coopérants (28, 29) sensiblement au niveau du côté longitudinal du contre-batteur (20) orienté à l'opposé dudit orifice d'accès (42).

11. Moissonneuse-batteuse selon la revendication 10 lorsqu'elle est dépendante directement ou indirectement de la revendication 2, caractérisée en ce que les moyens formant surfaces de support (40) ont la forme de deux éléments formant plaques (40) fixés au châssis de montage (25) au-dessous des éléments de châssis de contre-batteur (22, 23).

12. Moissonneuse-batteuse selon l'une quelconque des revendications précédentes, caractérisée en ce qu'elle est du type à écoulement axial à rotor double et comporte un châssis de montage simple (25) adapté en vue de supporter deux contre-batteurs (20) s'étendant côte-à-côte, par rapport à des rotors de battage et de séparation (15) respectifs ; chaque contre-batteur (20) étant apte à être monté sur le châssis de montage (25) dans une direction transversale par un orifice d'accès (42) ménagé dans la tôle latérale de moissonneuse-batteuse (43) adjacente, et des éléments de montage (28, 29) aptes à coopérer étant associés aux deux contre-batteurs (20) sensiblement au niveau des côtés longitudinaux opposés de celui-ci ; lesdits éléments de montage coopérants (28, 29) permettant leur accouplement mutuel lorsque les contre-batteurs (20) sont déplacés dans lesdites directions transversales.

13. Méthode d'installation d'un contre-batteur (20) sur une moissonneuse-batteuse à écoulement axial (10) ; ledit contre-batteur (20) étant apte à être monté sur un châssis de montage (25) prévu à l'intérieur de la moissonneuse-batteuse (10) et portant des premiers moyens de montage (29) aptes à coopérer avec des seconds moyens de montage (29) prévus sur le contre-batteur (20) pour supporter celui-ci dans un rapport de coopération avec un rotor de battage et de séparation (15) ; la méthode étant caractérisée en ce qu'elle comporte les étapes consistant à :
   - introduire le contre-batteur (20) par un orifice (42) ménagé dans une tôle latérale (43) de la moissonneuse-batteuse (10) ; ledit orifice (42) étant apte à être fermé par une porte (45) ;
   - déplacer le contre-batteur (20) dans une direction transversale vers les premiers moyens de montage (29) pour réaliser l'accouplement entre les premiers et les seconds moyens de montage (28,29) ; lesdits seconds moyens de montage (28) étant mobiles en rotation par rapport aux premiers moyens de montage (29) lorsqu' ils sont accouplés, afin de permettre un mouvement du contre-batteur (20) par rapport au rotor (15) ;

- fixer au moins une tringle de retenue (30) entre le châssis de montage (25) et le contre-batteur (20) pour empêcher un désaccouplement des seconds (28) et des premiers (29) moyens de montage pendant le fonctionnement de la moissonneuse-batteuse (10) ; et

- intercaler au moins une tringle de liaison (35) entre le châssis de montage (25) et le contre-batteur (20) à un emplacement éloigné des premiers et seconds moyens de montage coopérants (29, 28) pour supporter le contre-batteur (20) sur le châssis de montage (25) et commander la position angulaire du contre-batteur (20) par rapport au rotor (15).

14. Méthode selon la revendication 13, caractérisée en ce que:

- l'étape de déplacement comprend l'accouplement de deux seconds éléments de montage (28) espacés longitudinalement prévus sur les éléments de châssis respectifs (22, 23) du contre-batteur (20) avec les deux premiers éléments de montage (29) correspondants, également espacés longitudinalement, prévus sur ledit châssis de montage (25) ; lesdits deux premiers et seconds éléments de montage (29, 28) formant respectivement lesdits premiers et seconds moyens de montage (29, 28) ;

- l'étape de fixation comprend la fixation d'une tringle de retenue (30) entre chacun desdits éléments de châssis de contre-batteur (22, 23) et le châssis de montage (25) ; et

- l'étape de liaison comprend l'interconnexion d'une tringle de liaison (35) entre ledit élément de châssis de contre-batteur (22, 23) et le châssis de montage (25) en un point éloigné des deux premiers et seconds éléments de montage coopérants (29, 28) associés à chaque élément de châssis de contre-batteur (22, 23) respectif.

15. Méthode selon la revendication 13 ou 14, caractérisée en ce que l'étape de déplacement comprend l'étape consistant à poser le contre-batteur (20) sur des moyens formant surfaces de support (40) positionnés sur le châssis de montage (25) en vue de supporter une partie du poids du contre-batteur (20) pendant ladite étape de déplacement.

16. Méthode selon la revendication 15, caractérisée en ce que l'étape de liaison comprend :

- l'étape consistant à relever le contre-batteur (20) audessus des moyens formant surfaces de support (40) ; et

- l'étape consistant à sélectionner la longueur de la ou de chaque tringle de liaison (35) pour sélectionner une position de rotation souhaitée du contre-batteur (20) autour des premiers moyens de montage (29) prévus sur le châssis de montage (25) et positionner ainsi sélectivement le contre-batteur (20) par rapport au rotor (15).

17. Méthode selon l'une quelconque des revendications 14 à 16, caractérisée en ce que l'étape de fixation comprend les étapes consistant à :

- monter une tringle de retenue (30) sur chaque premier élément de montage respectif ayant la forme d'une broche de montage (29) s'étendant longitudinalement et fixée au châssis de montage (25) ; lesdites tringles de retenue (30) étant aptes à être positionnées sur lesdites broches de montage (29) le long de l'axe de celles-ci seulement; et

- rattacher lesdites tringles de retenue (30) auxdits éléments de ohâssis de contre-batteur (22, 23) correspondants.

**Ansprüche**

1. Axialfluß-Mähdrescher (10) mit:

- zwei mit Querabstand angeordneten Seitenplatten (43), von denen zumindestens eine eine Zugangsöffnung (42) aufweist;

- zumindestens einem Dresch- und Trennrotor (15), der sich in einer allgemein in Längsrichtung verlaufenden Richtung zwischen den Seitenblechen (43) erstreckt;

- einem Dreschkorb (20), der umfangsmäßig gegenüber dem zumindestens einem Rotor (15) angeordnet ist; und

- einem Befestigungsrahmen (25), der den Dreschkorb (20) relativ zu dem entsprechenden Rotor (15) haltert, wobei der Dreschkorb (20) lösbar an dem Befestigungsrahmen (25) über Befestigungsmittel (28,29,35) befestigt ist, die allgemein an den in Querrichtung gegenüberliegenden Längsseiten des Dreschkorbes (20) angeordnet sind, und wobei die Befestigungsmittel (28,29), die allgemein an derjenigen Längsseite des Dreschkorbes (20) angeordnet sind, die von der Zugangsöffnung (42) in der zumindestens einen Seitenplatte (43) abgewandt ist, durch zusammenwirkende Bauteile gebildet sind, die sowohl an dem Dreschkorb (20) als auch an dem Befestigungsrahmen (25) vorgesehen sind, dadurch **gekennzeichnet**, daß die zusammenwirkenden Befestigungsbauteile (28,29) allgemein an der von der Zugangsöffnung (42) abgewandten Längsseite des Dreschkorbes (20) einen gegenseitigen Eingriff allgemein in einer Querrichtung ermöglichen, wodurch der Dreschkorb (20) an dem Befestigungsrahmen (25) in einer Querrichtung durch die Zugangsöffnung (42) hindurch befestigt werden kann.

2. Mädrescher nach Anspruch 1, dadurch **gekennzeichnet**, daß der Dreschkorb (20) zwei sich in Querrichtung erstreckende, mit Längsabstand angeordnete Dreschkorb-Rahmenteile (22,23) aufweist, wobei ein Paar von zusammenwirkenden Befestigungsbauteilen (28,29) jedem einzelnen der Dreschkorb-Rahmenteile (22,23) zugeordnet ist.

3. Mähdrescher nach Anspruch 2, dadurch **gekennzeichnet**, daß jedes Paar von zusammenwirkenden Befestigungsbauteilen (28,29) die Form eines Stiftes (29) und eines damit zusammenwirkenden Jochs (28) aufweist, daß der Stift (29) entweder an dem Befestigungsrahmen (25) oder dem Dreschkorb (20) befestigt ist, während das Joch (28) an dem Dreschkorb (20) oder dem Befestigungsrahmen (25) vorgesehen und derart angeordnet ist, daß sein Eingriff mit dem entsprechenden Befestigungsstift (29) durch eine Bewegung des Dreschkorbes (20) in der Querrichtung bewirkt werden kann.

4. Mähdrescher nach Anspruch 3, dadurch **gekennzeichnet**, daß zumindestens ein Haltegliedteil (30) lösbar zwischen dem Befestigungsrahmen (25) und dem Dreschkorb (20) verbindbar ist, um die Joche (28) positionsmäßig während des Betriebs des Mähdreschers auf den jeweiligen Befestigungsstiften (29) festzuhalten.

5. Mähdrescher nach Anspruch 4, dadurch **gekennzeichnet**, daß ein Haltegliedteil (30) jedem zusammenwirkenden Stift (29) und Joch (28) zugeordnet ist.

6. Mähdrescher nach Anspruch 5, dadurch **gekennzeichnet**, daß jedes Haltegliedteil (30) die Form eines Verbindungsgliedes aufweist, das schwenkbar auf dem Befestigungsrahmen (25) oder einem entsprechenden Dreschkorb-Rahmenteil (22,23) an einer allgemein mit dem entsprechenden Befestigungsstift (29) ausgerichteten Stelle befestigbar ist und das lösbar mit dem entsprechenden Dreschkorb-Rahmenteil (22,23) oder dem Befestigungsrahmen (25) an einer Stelle verbindbar ist, die von dem entsprechenden zusammenwirkenden Stift (29) und Joch (28) entfernt ist.

7. Mähdrescher nach Anspruch 6, dadurch **gekennzeichnet**, daß jedes Halte-Verbindungsglied (30) lösbar mit dem entsprechenden Dreschkorb-Rahmenteil (22,23) bzw. dem Befestigungsrahmen (25) durch zumindestens zwei Befestigungsmittel (32) an mit Abstand entlang der Länge des Verbindungsgliedes (30) angeordneten Stellen und in einer Entfernung von dem entsprechenden zusammenwirkenden Stift (29) und Joch (28) verbindbar ist.

8. Mähdrescher nach einem der vorhergehenden Ansprüche, dadurch **gekennzeichnet**, daß die Befestigungsmittel (35) zwischen dem Befestigungsrahmen (25) und dem Dreschkorb (20), die allgemein an derjenigen Längsseite des Dreschkorbes (20) angeordnet sind, die benachbart zu der einen, die Zugangsöffnung (42) einschließenden Seitenplatte (43) angeordnet ist, die Form von Verbindungsgliedern (35) aufweisen, die den Dreschkorb (20) und den Befestigungsrahmen (25) lösbar miteinander verbinden, um die Position des Dreschkorbes (20) gegenüber dem Befestigungsrahmen (25) festzulegen.

9. Mähdrescher nach Anspruch 8, dadurch **gekennzeichnet**, daß die Verbindungsglieder einstellbar sind, um ihre Länge zu ändern und um eine Drehbewegung des Dreschkorbes (20) um eine Achse der zusammenwirkenden Befestigungsbauteile (28,29) zur positionsmäßigen Einstellung des Dreschkorbes (20) gegenüber dem Rotor (15) hevorzurufen.

10. Mähdrescher nach einem der vorhergehenden Ansprüche, dadurch **gekennzeichnet**, daß der Befestigungsrahmen (25) Stützflächenteile (40) benachbart zum Dreschkorb (20) einschließt, um vorübergehend den Dreschkorb (20) während seiner Querbewegung zur Erzielung eines Eingriffes zwischen den entsprechenden Befestigungsbauteilen (28,29) allgemein an der von der Zugangsöffnung (42) abgewandten Längsseite des Dreschkorbes (20) abzustützen.

11. Mähdrescher nach Anspruch 10, unter direkter oder indirekter Rückbeziehung auf Anspruch 2, dadurch **gekennzeichnet**, daß die Stützflächenteilen (40) die Form von zwei Plattenteilen (40) aufweisen, die an dem Befestigungsrahmen (25) unterhalb der Dreschkorb-Rahmenteile (22,23) befestigt sind.

12. Mähdrescher nach einem der vorhergehenden Ansprüch, dadurch **gekennzeichnet**, daß der Mähdrescher vom Doppelrotor-Axialflußtyp ist und einen einzigen Befestigungsrahmen (25) zur Halterung eines Paares von sich Seite an Seite erstreckenden Dreschkörben (20) relativ zu jeweiligen Dresch- und Trennrotoren (15) umfaßt, daß jeder Dreschkorb (20) auf dem Befestigungsrahmen (25) in einer Querrichtung durch eine Zugangsöffnung (42) in der benachbarten Mähdrescher-Seitenplatte (43) befestigbar ist, und daß zusammenwirkende Befestigungsbauteile (28,29) beiden Dreschkörben (20) allgemein an deren aufeinander gerichteten Längsseiten zugeordnet sind, wobei die zusammenwirkenden Befestigungsbauteile (28,29) einen gegenseitigen Eingriff ermöglichen, wenn die Dreschkörbe (20) in den Querrichtungen bewegt werden.

13. Verfahren zum Einbau eines Dreschkorbes (20) in einem Axialfluß-Mähdrescher (10), wobei der Dreschkorb auf einem Befestigungsrahmen (25) befestigbar ist, der in dem Mähdrescher (10) vorgesehen ist und erste Befestigungsmittel (29) trägt, die mit weiteren Befestigungsmitteln (28) auf dem Dreschkorb (20) zusammenwirken können, um den Dreschkorb (20) in zusammenwirkender Zuordnung mit einem Dresch- und Trennrotor (15) zu haltern, wobei das Verfahren dadurch **gekennzeichnet** ist, daß es die folgenden Schritte umfaßt:
   - Einsetzen des Dreschkorbes (20) durch eine Öffnung (42) in einer Seitenplatte (43) des Mähdreschers (10), wobei die Öffnung (42) durch eine Tür (45) verschließbar ist;
   - Bewegen des Dreschkorbes (20) in einer Querrichtung in Richtung auf die ersten Befestigungsmittel (29) zur Erzielung eines Eingriffes zwischen den ersten und den weiteren Befestigungsmitteln (29,28), wobei die weiteren Befestigungsmittel (28) gegenüber den ersten Befestigungsmitteln (29) bei ihrem Eingriff drehbar beweglich sind, um eine Bewegung des Dreschkorbes (20) gegenüber dem Rotor (15) zu ermöglichen;
   - Befestigen von zumindestens einem Halteglied (30) zwischen dem Befestigungsrahmen (25) und dem Dreschkorb (20) zur Verhinderung einer Trennung der weiteren Befestigungsmittel (28) von den ersten Befestigungsmitteln (29) während des Betriebs des Mähdreschers (10); und
   - Verbinden von zumindestens einem Verbindungsglied (35) zwischen dem Befestigungsrahmen (25) und dem Dreschkorb (20) an einer von den zusammenwirkenden ersten und weiteren Befestigungsmitteln (29,28) entfernten Stelle zur Halterung des Dreschkorbes (20) auf dem Befestigungsrahmen (25) und zur Steuerung der Winkelstellung des Dreschkorbes (20) gegenüber dem Rotor (15).

14. Verfahren nach Anspruch 13, dadurch **gekennzeichnet**, daß:
   - der Bewegungsschritt das Ankuppeln eines Paares von von mit Längsabstand angeordneten weiteren, auf jeweiligen Rahmenteilen (22,23) des Dreschkorbes (20) vorgesehenen Befestigungsbauteilen (28) an entsprechende Befestigungsbauteile eines Paares von in gleicher Weise mit Längsabstand angeordneten ersten Befestigungsbauteilen (29) einschließt, die auf dem Befestigungsrahmen 25) vorgesehen sind, wobei die ersten und weiteren Paare von Befestigungsbauteilen (29,28) die ersten bzw. weiteren Befestigungsmittel (29,28) bilden;
   - der Befestigungsschritt die Befestigung eines Halteglieds (30) zwischen jedem der Dreschkorb-Rahmenteile (22,23) und dem Befestigungsrahmen (25) einschließt; und
   - der Verbindungsschritt die Verbindung eines Verbindungsgliedes (35) zwischen jedem der Dreschkorb-Rahmenteile (22, 23) und dem Befestigungsrahmen (25) an einer Stelle einschließt, die von jedem Paar von zusammenwirkenden ersten und weiteren Befestigungsteilen (29,28) entfernt ist, die jedem jeweiligen Dreschkorb-Rahmenteil (22,23) zugeordnet sind.

15. Verfahren nach Anspruch 13 oder 14, dadurch **gekennzeichnet**, daß der Bewegungsschritt den Schritt des Auflegens des Dreschkorbes (20) auf Stützflächenteilen (40) einschließt, die auf dem Befestigungsrahmen (25) angeordnet sind, um einen Teil des Gewichtes des Dreschkorbes (20) während des Bewegungsschrittes abzustützen.

16. Verfahren nach Anspruch 15, dadurch **gekennzeichnet**, daß der Verbindungsschritt die folgenden Schritte einschließt:
- den Schritt des Anhebens des Dreschkorbes (20) über die Stützflächenteile (40); und
- den Schritt des Auswählens der Länge des oder jedes Verbindungsgliedes (35) zur Auswahl der gewünschten Drehstellung des Dreschkorbes (20) um die ersten Befestigungsmittel (29) an dem Befestigungsrahmen (25) und damit zur selektiven Einstellung des Dreschkorbes (20) gegenüber dem Rotor (15).

17. Verfahren nach einem der Ansprüche 14 bis 16, dadurch **gekennzeichnet**, daß der Befestigungsschritt die folgenden Schritte einschließt:
- Befestigen eines Haltegliedes (30) auf jedem jeweiligen ersten Befestigungsbauteil, das die Form eines sich in Längsrichtung erstreckenden Befestigungsstiftes (29) aufweist, der an dem Befestigungsrahmen (25) befestigt ist, wobei die Halteglieder (30) auf den Befestigungsstiften (29) lediglich entlang deren Achsen einstellbar sind; und
- Befestigen der Halteglieder (30) an den entsprechenden Dreschkorb-Rahmenteilen (22,23).

Fig. 1

*Fig. 2*

EP 0 241 981 B1

Fig. 3